# FASCICULE DE BREVET EUROPEEN

(11) **EP 2 499 753 B1**
(45) Date de publication et mention de la délivrance du brevet: **28.08.2013**
(21) Numéro de dépôt: 10759921.9
(22) Date de dépôt: 01.10.2010
(51) Int. Cl.: H04B 7/185

(54) **GESTION DYNAMIQUE DE LA CAPACITE DE ROUTAGE DE SIGNAUX POUR SATELLITE PAR UN PROCESSEUR NUMERIQUE TRANSPARENT A RECONFIGURATION RAPIDE.**
DYNAMISCHE STEUERUNG DER FÄHIGKEIT ZUR WEGLEITUNG VON SATELLITEN SIGNALEN DURCH EINEN DIGITALEN DURCHSICHTIGEN RECHNER MIT SCHNELLER WIEDERGESTALTUNG.
DYNAMIC CONTROL OF THE ROUTING CAPABILITY OF SATELLITE SIGNALS WITH A DIGITAL TRANSPARENT PROCESSOR WITH FAST RECONFIGURATION.

(30) Priorité: 10.11.2009 FR 0905402
(43) Date de publication de la demande: 19.09.2012
(73) Titulaire: Thales, 92200 Neuilly Sur Seine (FR)
(72) Inventeur: LE BOULC'H, Didier, F-31780 Castelginest (FR); VOISIN, Philippe, F-31100 Toulouse (FR); GACHON, Hélène, F-31400 Toulouse (FR)
(74) Mandataire: Lopez, Frédérique
(86) Numéro de dépôt international: PCT/EP2010/064617
(87) Numéro de publication internationale: WO 2011/057861

(56) Documents cités:
- WO-A1-2007/000794
- US-A- 5 825 325
- US-A1- 2004 185 775
- US-B1- 6 570 859

## Description

La présente invention concerne le domaine des satellites de communication comportant un processeur numérique.

Plus précisément, l'invention réside dans un dispositif de gestion du routage des signaux au sein d'un satellite de ce type, c'est-à-dire doté d'un processeur numérique et en particulier d'un processeur numérique transparent.

Le rôle des satellites de communication est essentiellement de retransmettre après amplification des signaux émis par des stations sol émettrices sur des liens dits montants vers des stations sol réceptrices, via des liens dits descendants. Ainsi, un tel satellite reçoit régulièrement un ensemble de signaux entrants, correspondant à des signaux « montants », émis par les stations sol émettrices et distribués sur un ensemble de canaux d'entrée du satellite et, conformément à une configuration prédéterminée, achemine ces signaux vers des canaux de sortie : un ensemble de signaux sortant est alors émis par le satellite vers les stations sol réceptrices. On parle dans ce contexte de routage des signaux à bord du satellite, via le processeur numérique qui l'équipe. La configuration du routage des signaux dans les satellites actuels est le plus souvent statique. Ainsi, une fois mise en oeuvre par le satellite, elle est immuable, ou du moins, lentement reconfigurable.

Les satellites actuellement en cours d'utilisation sont parfois dotés de processeurs analogiques. De tels processeurs génèrent des routes, reliant des canaux d'entrée à des canaux de sortie, qui présentent classiquement une largeur de bande de cinq à cinquante MHz. Cependant, les satellites développés aujourd'hui peuvent être dotés de processeurs numériques, permettant notamment de faire transiter par chaque satellite un plus grand nombre de canaux, des largeurs de bande plus faibles et plus programmables, et d'augmenter la connectivité entre les entrées et les sorties.

Voir US-A-2004/0185775 (Bell et al.)

Dans le contexte de l'invention, on s'intéresse en particulier aux satellites de communication dotés de processeurs numériques transparents. Par processeur numérique transparent, il est connu que l'on entend un processeur numérique qui permet de découper chaque canal entrant en sous-canaux de largeur variable, allant typiquement de quelques centaines de kHz à quelques MHz. Par ailleurs, le qualificatif « transparent » s'oppose à « régénératif » : les processeurs régénératifs réalisent des traitements visant à démoduler les signaux transmis ; ce n'est pas l'objet d'un processeur numérique transparent qui ne modifie pas la forme des signaux reçus.

Ainsi, certains satellites récents disposent de processeurs numériques transparents permettant le routage et le contrôle de tout sous-canal d'entrée vers tout sous-canal de sortie. Ceci rend également possible l'optimisation du gain recherché pour chaque signal sur chaque sous-canal.

Les technologies actuelles, dans ce contexte, présentent pour principal défaut que les processeurs numériques transparents utilisés sont statiques ou quasi-statiques. En d'autres termes, la reconfiguration du routage des signaux à bord des satellites actuels, même les plus récents, est très lente : il est impossible de la changer plusieurs fois par seconde, alors que le signal montant vers le satellite peut, dans certains cas, changer de fréquence à un rythme largement supérieur à une fois par seconde. Il est alors impossible pour le processeur numérique de suivre les évolutions instantanées du signal reçu.

Un but de l'invention est de remédier à cet inconvénient majeur. Ainsi pour assurer la possibilité de reconfigurer le routage des signaux à bord des satellites de communication, en temps réel, la présente invention propose d'utiliser, en lieu et place des processeurs numériques transparents non reconfigurables ou lentement reconfigurables actuels, des processeurs numériques transparents dits agiles.

A cet effet, l'invention a pour objet un dispositif de routage de signaux pour satellite, comportant un processeur numérique transparent et permettant de réceptionner sur un ensemble d'entrées un ensemble de signaux entrants émis par des stations émettrices et d'émettre, via un ensemble de sorties, un ensemble de signaux sortant correspondant vers des stations réceptrices, conformément à une configuration du routage des signaux, mis en oeuvre par ledit processeur numérique transparent, lesdites entrées étant associées à un ensemble de canaux et sous-canaux d'entrée et lesdites sorties étant associées à un ensemble de canaux et sous-canaux de sortie, ladite configuration du routage des signaux permettant de déterminer un ensemble de routes reliant, via des moyens électroniques de connexion, au moins un canal ou sous-canal d'entrée associé à au moins une entrée par laquelle est réceptionné un signal entrant à au moins un canal ou sous-canal de sortie associé à au moins une sortie par laquelle est émis un signal sortant, caractérisé en ce que le processeur numérique transparent présente une capacité de reconfiguration rapide du routage des signaux, à une fréquence de reconfiguration élevée, supérieure à dix hertz, de sorte que la route entre un canal ou sous-canal d'entrée et un canal ou sous-canal de sortie peut être modifiée à une fréquence égale à ladite fréquence de reconfiguration, et en ce que le dispositif comporte en outre des moyens de mise en oeuvre de la capacité de reconfiguration rapide du routage des signaux.

Dans une mise en oeuvre de l'invention, la fréquence de reconfiguration du routage est comprise entre un kilohertz et vingt kilohertz.

Avantageusement, les moyens de mise en oeuvre de la capacité de reconfiguration rapide du routage des signaux sont essentiellement constitués d'un équipement embarqué dans le satellite et adapté pour exécuter un programme informatique coopérant avec ledit processeur numérique transparent.

Avantageusement, le dispositif selon l'invention comporte en outre des moyens pour synchroniser la reconfiguration rapide du routage des signaux sur une loi de changement de fréquence des signaux entrants émis par une ou des stations émettrices configurées en mode saut de fréquence.

Dans un mode préféré de mise en oeuvre de l'invention, lesdits moyens pour synchroniser la reconfiguration rapide du routage des signaux sur une loi de changement de fréquence des signaux entrants émis par une ou des stations émettrices configurées en mode saut de fréquence comprennent un lien de communication rapide dédié, permettant auxdites stations émettrices configurées en mode saut de fréquence de communiquer auxdits moyens des ordres de reconfiguration rapide du routage des signaux adaptés à ladite loi de changement de fréquence.

Avantageusement, le lien de communication rapide dédié précédemment décrit permet un débit de communication de quelques mégabits par seconde.

Dans une mise en oeuvre de l'invention, plusieurs signaux entrants devant emprunter une même route peuvent être groupés de manière à ce qu'un seul signal sortant correspondant auxdits signaux entrants groupés soit émis.

Dans le dispositif selon l'invention, les moyens électroniques de connexion peuvent comprendre, pour chaque route, une chaîne de composants électroniques visant à assurer les fonctions suivantes :
- le filtrage des signaux entrants, de manière à extraire ces signaux et à produire des premiers signaux intermédiaires ;
- le contrôle de la puissance des premiers signaux intermédiaires, de manière à produire des deuxièmes signaux intermédiaires ;
- le changement de fréquence des deuxièmes signaux intermédiaires, de manière à produire des troisièmes signaux intermédiaires ;
- le contrôle du gain des troisièmes signaux intermédiaires, de manière à produire des signaux sortants avec la puissance désirée.

D'autres caractéristiques et avantages de l'invention apparaîtront à l'aide de la description qui suit faite en regard des dessins annexés qui représentent :
- la figure 1 : le schéma simplifié d'un exemple de routage de signal traité de manière analogique, dans un satellite de l'état de la technique ;
- la figure 2 : le schéma d'un exemple d'utilisation connue d'un processeur numérique transparent « statique » pour le routage de signaux à bord d'un satellite de communication ;
- la figure 3 : un schéma permettant d'expliciter de manière simple le principe de l'invention, fondé sur l'utilisation d'un processeur numérique transparent « agile ».

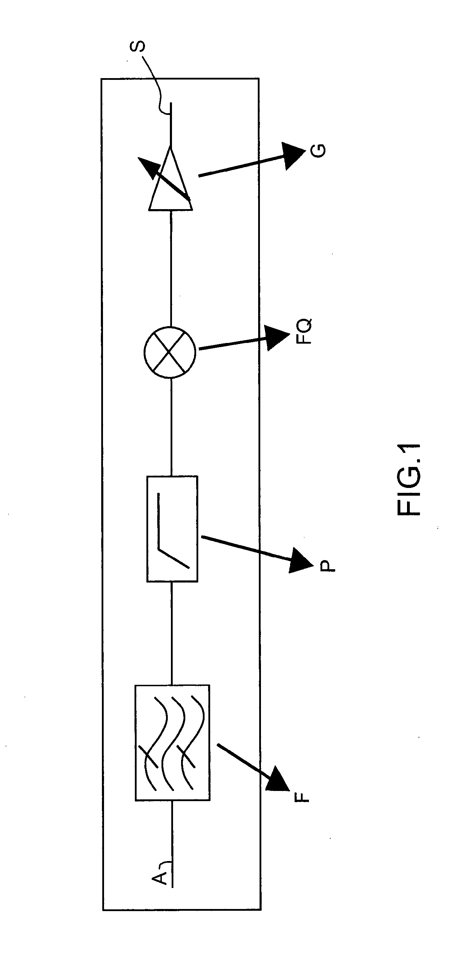

La figure 1 présente un schéma permettant d'expliciter le fonctionnement de charges utiles conventionnelles actuelles, pour ce qui concerne des satellites de communications de technologie transparente, conformément à la définition du qualificatif « transparent » donné ci-dessus. Sur la figure 1, on constate que les charges utiles conventionnelles actuelles sont équipées, sur chacun de leurs canaux, de différents équipements hyperfréquences disposés entre l'accès A au satellite, correspondant à une entrée du satellite associée à un canal d'entrée, et la sortie S, associée à un canal de sortie, d'où est émis un signal vers le sol. De manière générale, lesdits équipements hyperfréquences sont :
- un dispositif de filtrage F, permettant de filtrer le signal entrant dans le satellite ;
- un dispositif de contrôle de puissance P ;
- un dispositif FQ permettant de modifier la fréquence du signal ;
- un dispositif G de gestion du gain appliqué audit signal, en vue de son émission vers le sol.
- éventuellement, un dispositif de mesure de puissance et de contrôle automatique du gain, donc du niveau de puissance de sortie ;
- éventuellement, un dispositif de linéarisation ou de prédistorsion du signal.

Par ailleurs, les signaux entrants peuvent avoir nécessité un démultiplexage tandis que réciproquement les signaux sortant peuvent avoir été multiplexés.

Ainsi, dans les charges utiles de l'état de la technique, l'ensemble des opérations effectuées à bord du satellite, à savoir, comme expliqué précédemment, le changement de fréquence éventuel, la limitation de puissance des signaux reçus, ou encore la gestion du gain appliqué à ces signaux, est effectué au niveau de chacun des canaux. Ceci est pénalisant car les largeurs de bandes requises, pour chaque canal, peuvent typiquement être de l'ordre de 20 MHz à 40 MHz et plus. L'autre défaut réside dans le fait que les opérations effectuées sur les signaux entrants ne peuvent être individualisées par sous-canal. Par conséquent, lorsqu'un canal comprend divers sous-canaux, c'est-à-dire qu'il supporte différents signaux entrants indépendants pouvant en principe nécessiter un traitement individualisé, le traitement effectué à bord est unique par canal ; il est donc identique pour tous les sous-canaux.

Les inconvénients qui découlent de ces technologies se traduisent essentiellement par un manque de souplesse d'utilisation et un déficit de connectivités entre les différents spots d'entrées et de sorties, notamment du fait de l'impossibilité de gérer le routage des sous-canaux de manière individualisée.

Ces technologies sont donc incompatibles des besoins actuels, qui requièrent à la fois des entrées et sorties de plus en plus nombreuses, donc de plus en plus de connectivités, et aussi de plus en plus de sécurité, donc des largeurs de canaux importantes.

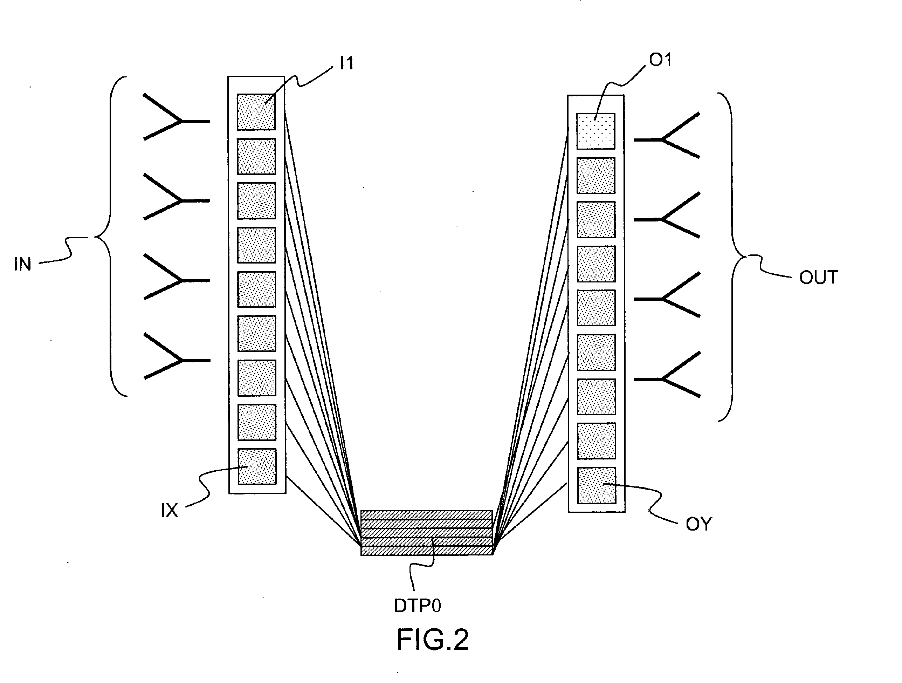

Afin de remédier partiellement à ces inconvénients, l'état de la technique a déjà intégré l'utilisation de processeurs numériques transparents, dont le mode de fonctionnement est illustré par la figure 2.

Le schéma de la figure 2 présente de manière très simplifiée une charge utile de satellite de communication récent disposant d'un ensemble de spots d'entrée IN, chaque entrée étant associée à un ou plusieurs canaux ou sous-canaux d'entrée I1 - IX, et un ensemble de spots de sorties OUT auxquelles sont reliés un ou plusieurs canaux ou sous-canaux de sortie O1-OY. La charge utile représentée sur la figure 2 comporte en outre un processeur numérique transparent DTP0. L'utilisation de processeurs numériques transparents dans l'état de la technique récent permet de résoudre en partie le problème de la multiplicité des connectivités. Ainsi, le processeur numérique transparent DTP0 est capable de gérer individuellement les canaux et sous canaux I1 - IX, de leur appliquer un traitement numérique et un gain également individualisés, et de les connecter à tout canal ou sous-canal de sortie O1 - OY. Le processeur numérique transparent DTP0 permet donc le routage et le contrôle de canaux ou de sous-canaux de n'importe quel accès ou spot d'entrée IN vers n'importe quel accès ou spot de sortie OUT, et de le positionner dans n'importe quelle partie du spectre de sortie, c'est-à-dire à n'importe quelle fréquence compatible des spots de sortie OUT. Ce type de technologie permet également une optimisation de la capacité des satellites de communication moderne du fait de la possibilité de réglage du gain associé à chaque canal ou sous-canal.

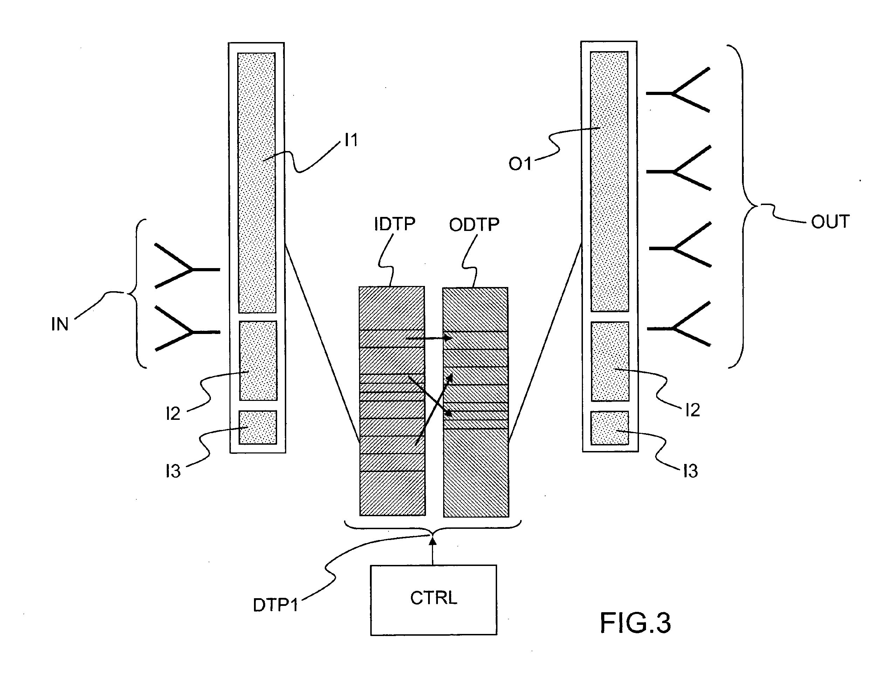

Le problème des processeurs numériques transparents DPTO actuels réside dans le fait qu'ils ne permettent qu'un routage « statique » des canaux. La configuration du routage des signaux à bord des satellites est figée ; elle ne peut être modifiée en cours d'utilisation qu'au prix d'une reconfiguration lente, typiquement d'une durée d'une heure, ce qui est totalement incompatible avec la rapidité de fluctuation des signaux entrants. Ainsi, lorsque des signaux émis par des stations émettrices en direction du satellite passent en mode « saut de fréquence », la bande passante totale occupée par les signaux, appelée « bande de saut de fréquence », devient beaucoup plus importante que la bande occupée par un signal à un instant donné, qui dépend quant à elle essentiellement de la quantité d'information à transmettre. Avec un processeur numérique transparent DTP0, la configuration du routage à bord du satellite est figée ou lentement reconfigurable ; la canalisation du satellite doit donc être adaptée à la bande de saut, ce qui impose des canaux ou sous-canaux assez larges et donc peu nombreux pour une bande passante satellite limitée. Au contraire, lorsque la canalisation est rendue rapidement reconfigurable par un processeur numérique transparent agile, comme le préconise la présente invention et conformément à la description de la figure 3 ci-après, la sous-canalisation peut suivre les fluctuations rapides du signal montant et s'adapter à la bande réellement utile du signal à un instant donné, appelée « bande utile instantanée ». Cette bande instantanée étant de un à trois ordres de grandeurs inférieure à la bande de saut, le nombre de sous-canaux peut être augmenté de un à trois ordres de grandeur, ce qui permet une augmentation de la connectivité de un à trois ordres de grandeur également.

Des télécommandes définissent alors, depuis lesdites stations émettrices, le plan de fréquence que le processeur numérique transparent DTP0 doit utiliser. Ainsi, les processeurs numériques transparents DTP0 actuels ne proposent aucune capacité de traitement et de transmission, à bord du satellite, de signaux en mode « saut de fréquence » ; ils ne peuvent les acheminer qu'en élargissant les sous canaux à une largeur de bande au moins égale à la bande de saut, en perdant l'avantage de connectivité accrue apporté par la sous-canalisation du DTP0.

De plus, lorsque des sous-canaux I1 - IX sont passés en mode « saut de fréquence », et sont susceptibles d'être routés vers différentes sorties du processeur numérique transparent DTP0, et donc vers différents canaux ou sous-canaux O1 - OY, cette contrainte impose de passer tous les canaux et sous-canaux concernés en mode « saut de fréquence », y compris sur le lien descendant, c'est-à-dire en sortie du satellite de communication, ce qui peut rapidement conduire à avoir la totalité du trafic traité dans le processeur numérique transparent DTP0 qui bascule dans le mode « saut de fréquence » pour éviter les collisions sur les spots de sortie OUT.

De ce fait, même si la mise en oeuvre de communications à « saut de fréquence » est surtout utile pour la liaison montante vers le satellite, la liaison descendante va aussi être en mode « saut de fréquence ».

Par conséquent, dés lors que quelques sous-canaux sont passés en mode « saut de fréquence », il n'est plus possible de gérer individuellement les sous-canaux avec les processeurs numériques transparents DTP0 de la génération actuelle. Cela se traduit par une surconsommation de bande passante sur le lien descendant du satellite.

C'est pour pallier les inconvénients précités des processeurs numériques transparents actuels que, dans le cadre de la présente invention, des processeurs numériques transparents dits agiles ont été développés. Ces processeurs numériques transparents agiles présentent l'avantage d'être très rapidement reconfigurables, et en particulier de pouvoir s'adapter à chaque saut de fréquence.

La figure 3 représente de manière schématique le fonctionnement des charges utiles équipées de processeurs numériques transparents agiles.

La charge utile partiellement et schématiquement représentée sur la figure 3 présente un ensemble de spots d'entrées I1, I2, I3 et un ensemble de spots de sortie 01, 02, 03. Les canaux et sous-canaux d'entrée I1, I2, 13 et de sortie 01, 02, 03 peuvent présenter une largeur de bande de plusieurs centaines de mégahertz. Le processeur numérique transparent DTP1 présente la particularité d'être « agile », c'est-à-dire qu'il est possible de le reconfigurer très rapidement.

Ainsi, le processeur numérique transparent agile DTP1 est capable de gérer en parallèle des canaux ou sous-canaux en mode « saut de fréquence », par exemple 11, et d'autres opérant à des fréquences fixes, par exemple 12 et 13. De fait, le processeur numérique transparent DTP1, selon l'invention, peut être reconfiguré à l'aide d'un dispositif CTRL, de préférence embarqué, permettant de reconfigurer en temps réel le routage des signaux à bord du satellite. Dans un exemple de mise en oeuvre préférée de l'invention, la reconfiguration du routage des signaux à bord du satellite par l'intermédiaire du processeur numérique transparent agile DTP1 est synchronisée sur le rythme des changements de fréquence lorsque des signaux montants vers le satellite sont en mode « saut de fréquence ». Comme le montre la figure 3, le processeur numérique transparent agile DTP1 présente un ensemble de sous-canaux d'entrées IDTP et un ensemble de sous-canaux de sortie ODTP. La configuration du routage des signaux à bord consiste, comme le montrent les flèches sur la figures 3, à gérer la connectivité à bord du satellite : les canaux ou sous-canaux d'entrée 11; 12, 13 sont traités et connectés à des canaux ou sous-canaux de sortie 01, 02, 03. La particularité de l'invention réside dans la faculté offerte par le processeur numérique transparent agile DTP1 de modifier très rapidement ladite configuration du routage des signaux à bord du satellite ainsi que le positionnement fréquentiel des signaux descendant. Ce positionnement fréquentiel variable des signaux sortant du processeur numérique transparent agile DTP1 peut constituer un désétalement complet, pour des signaux à fréquence fixe, ou constituer un réétalement différent de l'étalement montant par un pilotage rapide de la position fréquentielle de chaque signal.

Pour réaliser cette fonction, l'invention repose sur l'utilisation du dispositif de contrôle CTRL, de préférence synchronisé sur les changements de fréquence des signaux montants, et permettant de modifier en temps réel la configuration du routage des signaux à bord du satellite par l'intermédiaire du processeur numérique transparent DTP1. A cette fin, un lien de communication rapide dédié permet au dispositif de contrôle CTRL de suivre les informations relatives aux changements de fréquence des signaux montants, lesdites informations étant émises par les stations sol émettrices des signaux montants en mode « saut de fréquence ».

Il faut noter que, dans ce contexte, le lien rapide dédié doit être cohérent du rythme des changements de fréquence des signaux montants, lesdits signaux montants devant être synchronisés sur une même référence d'horloge, et ladite référence d'horloge devant également être distribuée à bord du satellite. Cela permet de garantir la possibilité de synchroniser le rythme de reconfiguration du routage des signaux à bord du satellite via le processeur numérique transparent agile DTP1 sur le rythme des changements de fréquence des signaux montants en mode « saut de fréquence ».

En résumé, la présente innovation consiste dans le développement et l'utilisation de processeurs numériques transparents agiles dans le cadre de satellites de communication.

L'invention présente l'avantage majeur de permettre de décorréler la bande d'étalement du lien montant, également appelée bande de saut, de la bande utilisée pour le routage du signal dans le satellite. La bande utilisée sur le lien descendant peut elle aussi être limitée à la bande utile instantanée ou être élargie par un étalement généré par le positionnement fréquentiel variable en sortie du DTP agile. De ce fait, l'invention rend possible l'optimisation, d'une part, des capacités de protection des satellites de communication, par un possible étalement du lien montant dans une bande large, et celle, d'autre part, des capacités de connectivité et de capacité totale desdits satellites de communication, le nombre de sous-canaux pouvant être augmenté et la bande passante utilisée à la descente pouvant être limitée à la bande utile instantanée des communications et non pas étendue à la bande d'étalement du lien montant.

## Revendications

1. Dispositif de routage de signaux pour satellite, comportant un processeur numérique transparent (DTP1) et permettant de réceptionner sur un ensemble d'entrées (IN) un ensemble de signaux entrants émis par des stations émettrices et d'émettre, via un ensemble de sorties (OUT), un ensemble de signaux sortant correspondant vers des stations réceptrices, conformément à une configuration du routage des signaux, mis en oeuvre par ledit processeur numérique transparent (DTP1), lesdites entrées (IN) étant associées à un ensemble de canaux et sous-canaux d'entrée (11,12,13) et lesdites sorties (OUT) étant associées à un ensemble de canaux et sous-canaux de sortie (01,02,03), ladite configuration du routage des signaux permettant de déterminer un ensemble de routes reliant, via des moyens électroniques de connexion, au moins un canal ou sous-canal d'entrée (I1) associé à au moins une entrée (IN) par laquelle est réceptionné un signal entrant à au moins un canal ou sous-canal de sortie (O1) associé à au moins une sortie (OUT) par laquelle est émis un signal sortant, **caractérisé en ce que** le processeur numérique transparent (DTP1) présente une capacité de reconfiguration rapide du routage des signaux, à une fréquence de reconfiguration élevée, supérieure à dix hertz, de sorte que la route entre un canal ou sous-canal d'entrée (11) et un canal ou sous-canal de sortie (O1) peut être modifiée à une fréquence égale à ladite fréquence de reconfiguration, et **en ce que** le dispositif comporte en outre des moyens (CTRL) de mise en oeuvre de ladite capacité de reconfiguration rapide du routage des signaux.

2. Dispositif selon la revendication 1, **caractérisé en ce que** la fréquence de reconfiguration du routage est comprise entre un kilohertz et vingt kilohertz.

3. Dispositif selon l'une quelconque des revendications précédentes, **caractérisé en ce que** les moyens (CTRL) de mise en oeuvre de la capacité de reconfiguration rapide du routage des signaux sont essentiellement constitués d'un équipement embarqué dans le satellite et adapté pour exécuter un programme informatique coopérant avec ledit processeur numérique transparent (DTP1).

4. Dispositif selon l'une quelconque des revendications précédentes, **caractérisé en ce qu'**il comporte en outre des moyens (CTRL) pour synchroniser la reconfiguration rapide du routage des signaux sur une loi de changement de fréquence des signaux entrants émis par une ou des stations émettrices configurées en mode saut de fréquence.

5. Dispositif selon la revendication 4, **caractérisé en ce que** lesdits moyens (CTRL) pour synchroniser la reconfiguration rapide du routage des signaux sur une loi de changement de fréquence des signaux entrants émis par une ou des stations émettrices configurées en mode saut de fréquence comprennent un lien de communication rapide dédié, permettant auxdites stations émettrices configurées en mode saut de fréquence de communiquer auxdits moyens (CTRL) des ordres de reconfiguration rapide du routage des signaux adaptés à ladite loi de changement de fréquence.

6. Dispositif selon la revendication 5, **caractérisé en ce que** ledit lien de communication rapide dédié permet un débit de communication de quelques kilobits à quelques dizaines de mégabits par seconde.

7. Dispositif selon l'une quelconque des revendications précédentes, **caractérisé en ce que** plusieurs signaux entrants devant emprunter une même route peuvent être groupés de manière à ce qu'un seul signal sortant correspondant auxdits signaux entrants groupés soit émis.

8. Dispositif selon l'une quelconque des revendications précédentes, **caractérisé en ce que**, pour chaque route, les moyens électroniques de connexion comprennent une chaîne de composants électroniques visant à assurer les fonctions suivantes :
• le filtrage des signaux entrants, de manière à extraire ces signaux et à produire des premiers signaux intermédiaires ;
• le contrôle de la puissance des premiers signaux intermédiaires, de manière à produire des deuxièmes signaux intermédiaires ;
• le changement de fréquence des deuxièmes signaux intermédiaires, de manière à produire des troisièmes signaux intermédiaires ;
• le contrôle du gain des troisièmes signaux intermédiaires, de manière à produire des signaux sortants avec la puissance • désirée.

## Patentansprüche

1. Signal-Routing-Vorrichtung für einen Satelliten, die einen digitalen transparenten Prozessor (DTP1) umfasst und den Empfang, auf einem Satz Eingänge (IN), eines Satzes von von Sendestationen gesendeten Eingangssignalen und das Senden, über einen Satz von Ausgängen (OUT), eines entsprechenden Satzes von Ausgangssignalen zu Empfangsstationen gemäß einer Signal-Routing-Konfiguration zulässt, die von dem digitalen transparenten Prozessor (DTP1) implementiert wird, wobei die Eingänge (IN) mit einem Satz von Eingangskanälen und -subkanälen (I1, I2, I3) assoziiert sind und die Ausgänge (OUT) mit einem Satz von Ausgangskanälen und -subkanälen (O1, 02, 03) assoziiert sind, wobei die Signal-Routing-Konfiguration die Ermittlung eines Satzes von Routen zulässt, die über elektronische Verbindungsmittel wenigstens einen Eingangskanal oder -subkanal (I1) in Verbindung mit wenigstens einem Eingang (IN) verbinden, durch den ein Eingangssignal empfangen wird, mit wenigstens einem Ausgangskanal oder -subkanal (O1), der mit wenigstens einem Ausgang (OUT) assoziiert ist, durch den ein Ausgangssignal gesendet wird, **dadurch gekennzeichnet, dass** der digitale transparente Prozessor (DTP1) Kapazität für ein schnelles Umkonfigurieren des Signal-Routing mit einer hohen Umkonfigurationsfrequenz von mehr als zehn Hertz hat, so dass die Route zwischen einem Eingangskanal oder -subkanal (I1) und einem Ausgangskanal oder -subkanal (O1) mit einer Frequenz modifiziert werden kann, die gleich der Umkonfigurationsfrequenz ist, und dadurch, dass die Vorrichtung ferner Mittel (CTRL) zum Implementieren der Kapazität für ein schnelles Umkonfigurieren des Signal-Routing umfasst.

2. Vorrichtung nach Anspruch 1, **dadurch gekennzeichnet, dass** die Routing-Umkonfigurationsfrequenz zwischen ein Kilohertz und zwanzig Kilohertz liegt.

3. Vorrichtung nach einem der vorherigen Ansprüche, **dadurch gekennzeichnet, dass** die Mittel (CTRL) zum Implementieren der Kapazität für ein schnelles Umkonfigurieren des Signal-Routing im Wesentlichen von Ausrüstung an Bord des Satelliten gebildet werden, die so ausgelegt ist, dass sie ein Computerprogramm ausführt, das mit dem digitalen transparenten Prozessor (DTP1) zusammenwirkt.

4. Vorrichtung nach einem der vorherigen Ansprüche, **dadurch gekennzeichnet, dass** sie ferner Mittel (CTRL) zum Synchronisieren der schnellen Umkonfiguration des Signal-Routing gemäß einem Frequenzänderungsgesetz von Eingangssignalen umfasst, die von einer oder mehreren im Frequenzsprungmodus konfigurierten Sendestationen gesendet werden.

5. Vorrichtung nach Anspruch 4, **dadurch gekennzeichnet, dass** die Mittel (CTRL) zum Synchronisieren der schnellen Umkonfiguration des Signal-Routing gemäß einem Frequenzänderungsgesetz von Eingangssignalen, die von einer oder mehreren im Frequenzsprungmodus konfigurierten Sendestationen gesendet werden, eine dedizierte schnelle Kommunikationsverbindung umfassen, die es zulässt, dass die im Frequenzsprungmodus konfigurierten Sendestationen Befehle für eine schnelle Umkonfiguration des Signal-Routing, die an das Frequenzänderungsgesetz angepasst sind, zu den Mitteln (CTRL) übermitteln.

6. Vorrichtung nach Anspruch 5, **dadurch gekennzeichnet, dass** die dedizierte schnelle Kommunikationsverbindung eine Kommunikationsrate von einigen Kilobits bis zu ein paar Dutzend Megabits pro Sekunde zulässt.

7. Vorrichtung nach einem der vorherigen Ansprüche, **dadurch gekennzeichnet, dass** mehrere Eingangssignale, die dieselbe Route benutzen müssen, so gruppiert werden können, dass nur ein einziges Ausgangssignal, das den gruppierten Eingangssignalen entspricht, gesendet wird.

8. Vorrichtung nach einem der vorherigen Ansprüche, **dadurch gekennzeichnet, dass** die elektronischen Verbindungsmittel für jede Route eine Kette von elektronischen Komponenten zum Bereitstellen der folgenden Funktionen umfassen:
• Filtern von Eingangssignalen, um diese Signale zu extrahieren und erste Zwischensignale zu erzeugen;
• Regeln der Leistung der ersten Zwischensignale, um zweite Zwischensignale zu erzeugen;
• Ändern der Frequenz der zweiten Zwischensignale, um dritte Zwischensignale zu erzeugen;
• Regeln der Verstärkung der dritten Zwischensignale, um Ausgangssignale mit der gewünschten Leistung zu erzeugen.

## Claims

1. A signal routing device for a satellite, comprising a digital transparent processor (DTP1) and allowing reception, on a set of inputs (IN), of a set of incoming signals transmitted by transmission stations and transmission, via a set of outputs (OUT), of a corresponding set of outgoing signals toward reception stations, in accordance with a signal routing configuration implemented by said digital transparent processor (DTP1), said inputs (IN) being associated with a set of input channels and sub-channels (I1, I2, I3) and said outputs (OUT) being associated with a set of output channels and sub-channels (O1, 02, 03), said signal routing configuration allowing a set of routes to be determined, which connect, via electronic connection means, at least one input channel or sub-channel (I1) associated with at least one input (IN), through which an incoming signal is received, to at least one output channel or sub-channel (O1) associated with at least one output (OUT), through which an outgoing signal is transmitted, **characterised in that** said digital transparent processor (DTP1) has a capacity for rapid reconfiguration of signal routing, at a high reconfiguration frequency of more than ten hertz, so that the route between an input channel or sub-channel (I1) and an output channel or sub-channel (O1) can be modified at a frequency that is equal to said reconfiguration frequency, and **in that** said device further comprises means (CTRL) for implementing said capacity for rapid reconfiguration of signal routing.

2. The device according to claim 1, **characterised in that** the routing reconfiguration frequency is between one kilohertz and twenty kilohertz.

3. The device according to any one of the preceding claims, **characterised in that** said means (CTRL) for implementing said capacity for rapid reconfiguration of signal routing are basically constituted by equipment on board the satellite and designed to execute a computer program cooperating with said digital transparent processor (DTP1).

4. The device according to any one of the preceding claims, **characterised in that** it further comprises means (CTRL) for synchronising said rapid reconfiguration of signal routing according to a frequency change law for the incoming signals transmitted by one or more transmission stations configured in frequency hop mode.

5. The device according to claim 4, **characterised in that** said means (CTRL) for synchronising said rapid reconfiguration of signal routing according to a frequency change law for the incoming signals transmitted by one or more transmission stations configured in frequency hop mode comprise a dedicated rapid communication link allowing said transmission stations configured in frequency hop mode to communicate commands for rapid reconfiguration of signal routing that are adapted to said frequency change law to said means (CTRL).

6. The device according to claim 5, **characterised in that** said dedicated rapid communication link allows a communication rate of a few kilobits to a few tens of megabits per second.

7. The device according to any one of the preceding claims, **characterised in that** a plurality of incoming signals that must use the same route can be grouped so that only one outgoing signal corresponding to said grouped incoming signals is transmitted.

8. The device according to any one of the preceding claims, **characterised in that**, for each route, said electronic connection means comprise a chain of electronic components for providing the following functions:
• filtering incoming signals so as to extract these signals and to produce first intermediate signals;
• controlling the power of said first intermediate signals so as to produce second intermediate signals;
• changing the frequency of said second intermediate signals so as to produce third intermediate signals;
• controlling the gain of said third intermediate signals so as to produce outgoing signals with the required power.
